# EUROPEAN PATENT SPECIFICATION

(11) **EP 2 390 593 B1**
(45) Date of publication and mention of the grant of the patent: **13.04.2016**
(21) Application number: 11250539.1
(22) Date of filing: 19.05.2011
(51) Int. Cl.: B60H 3/02, F24F 3/14

(54) **Humidity control and air conditioning system**
Feuchtigkeitssteuerung und Klimaanlagensystem
Contrôle de l'humidité et système de climatisation d'air

(30) Priority: 26.05.2010 CN 201010200624
(43) Date of publication of application: 30.11.2011
(73) Proprietor: THERMO KING CORPORATION, Minnepolis, MN 55420 (US)
(72) Inventor: Ouyang, Jun, Shanghai 201101 (CN); Tang, Hu, Shenzhen Guangdong 518000 (CN); Zhong, Guohui, Shenzhen Guangdong 518055 (CN); Aigen, Deng, Shanghai 201100 (CN); Tang, Hu, Shenzhen Guangdong 518000 (CN)
(74) Representative: Holmes, Matthew Peter

(56) References cited:
- EP-A1- 1 681 518
- FR-A1- 2 682 327
- JP-A- H07 755
- US-A- 5 878 590

## Description

### BACKGROUND

The present invention relates to a humidity control and air conditioning system. More particularly, the present invention relates to a humidity control and air conditioning system that uses evaporators which are coated in desiccant. An air conditioner using an evaporator coated in desiccant is knowon from EP 1 681 518 A1.

Humidity control and air conditioning systems are used in automobiles and buses to provide a comfortable environment for occupants. Removing excess moisture from the air, without overcooling the air, makes the interior of the vehicle comfortable for the occupants. A vehicle with humidity control and air conditioning systems is known from US 5 878 590 A.

### SUMMARY

In one embodiment, the invention provides a vehicle according to claim 1, having a conditioned space and a humidity control and air conditioning system. The humidity control and air conditioning system includes two heat exchangers, each heat exchanger being coated with desiccant. The heat exchangers are configured to operate in a cooling mode or a regeneration mode. In the cooling mode, cooled refrigerant is introduced into the heat exchanger operating the cooling mode, air is passed through the heat exchanger, the air is cooled, and moisture from the air is adsorbed by the desiccant. In the regeneration mode, hot air or exhaust passes over the heat exchanger operating in the regeneration mode and the heated air removes moisture from the desiccant. The humidity control and air conditioning system is capable of alternating the heat exchangers between the cooling mode and the regeneration mode. The humidity control and air conditioning system also includes dampers and a plurality of air ducts to selectively direct air through the heat exchangers. Air is directed from the atmosphere via air ducts and dampers to a heat exchanger operating in the cooling mode and then to the passenger compartment. Air is directed from the atmosphere via air ducts and dampers to a heat exchanger operating in the regeneration mode and then to the atmosphere.

In another embodiment, the invention provides a method for dehumidifying air entering a vehicle. The method comprises alternating first and second heat exchangers, each being coated with desiccant, between a cooling mode and a regeneration mode. The first heat exchanger is set to a cooling mode which directs cooled refrigerant into the first heat exchanger, air is then passed through the first heat exchanger in order to cool the air and remove moisture from the air, then the air is discharged into a passenger compartment of the vehicle. The second heat exchanger is set to a regeneration mode in which a source of heat heats the second heat exchanger, then air is passed through the heat exchanger in order to assist with the removal of moisture from the second heat exchanger, the air is then discharged into the atmosphere. The modes of the first and second heat exchangers are then alternated such that the second heat exchanger cools the air and the first heat exchanger is regenerated.

Other aspects of the invention will become apparent by consideration of the detailed description and accompanying drawings.

### BRIEF DESCRIPTION OF THE DRAWINGS

Fig. 1 is a schematic view of a humidity control and air conditioning system according to one embodiment of the present invention illustrating a first mode of operation.
Fig. 2 is another schematic view of the humidity control and air conditioning system of Fig. 1 illustrating a second mode of operation.
Fig. 3 is a schematic view of an air flow controller system.
Fig. 4 is a schematic view of a humidity control and air conditioning system according to another construction of the present invention illustrating a first mode of operation.
Fig. 5 is another schematic view of the humidity control and air conditioning system of Fig. 4 illustrating a second mode of operation.
Fig. 6 is a schematic view of a humidity control and air conditioning system according to another construction of the present invention illustrating a first mode of operation.
Fig. 7 is another schematic view of the humidity control and air conditioning system of Fig. 6, illustrating a second mode of operation.
Fig. 8 is a perspective view of a heat exchanger unit of Figs. 4-7.
Fig. 9 is a schematic view of a humidity control and air conditioning system according to another construction of the present invention illustrating a first mode of operation.
Fig. 10 is another schematic view of the humidity control and air conditioning system in Fig. 9, illustrating a second mode of operation.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

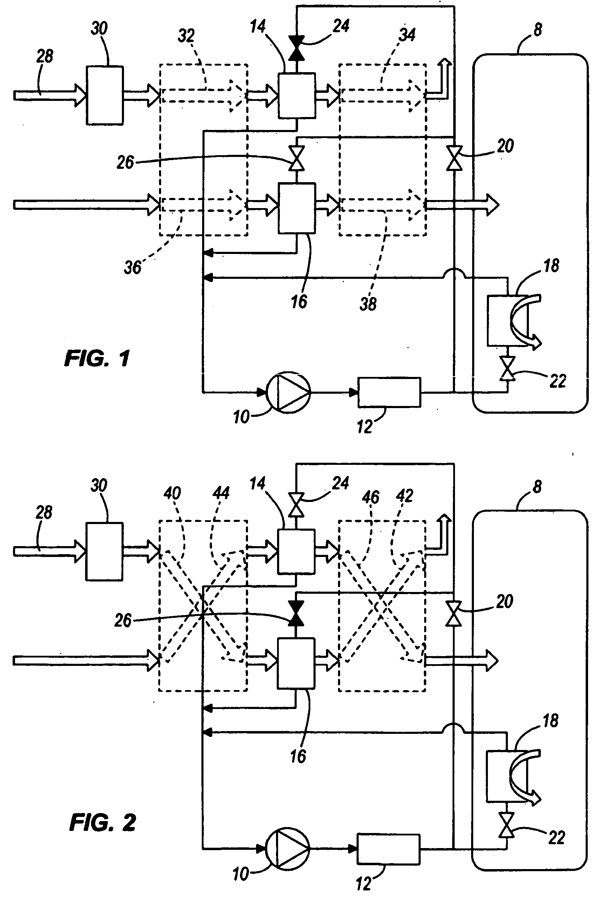

Figs. 1 and 2 show a humidity control and air conditioning system for removing humidity and heat from air before said air is introduced into a passenger compartment 8 of a vehicle such as an automobile or bus. The system comprises a compressor 10 fluidly connected in series with a condenser 12, and a first, second, and third heat exchangers 14, 16. 18 being connected in parallel between the condenser 12 and the compressor 10. A first expansion valve 20 is located downstream of the condenser 12 and upstream of both the first and second heat exchangers 14, 16. A second expansion valve 22 is located between the condenser 12 and the third heat exchanger 18. A first refrigerant control valve 24 (e.g. a solenoid valve) is located between the first heat exchanger 14 and the first expansion valve 20. A second refrigerant control valve 26 is located between the second heat exchanger 16 and the first expansion valve 20. A controller (not shown) is operably connected to the first and second refrigerant control valves 24, 26. The first and second heat exchangers 14, 16 are coated in desiccant. Desiccant is a material that captures/contains water molecules to dry an object or a volume of air. Desiccant may contain sorbent, adsorbent, and/or absorbent materials.

Fig. 1 illustrates a plurality of ducts which serve to direct air in a first mode of operation. A first duct 28 directs outside air to a heat source 30. A second duct 32 directs air from the heat source 30 to the first heat exchanger 14. A third duct 34 directs air from the first heat exchanger 14 to the atmosphere. A fourth duct 36 directs outside air to the second heat exchanger 16. A fifth duct 38 directs air from the second heat exchanger 16 to the passenger compartment 8 of a vehicle. A plurality of fans (not shown) serve to move air through the various ducts.

Fig. 2 illustrates a plurality of ducts which serve to direct air in a second mode of operation. The first duct 28 directs outside air to a heat source 30. A sixth duct 40 directs air from the heat source 30 to the second heat exchanger 16. A seventh duct 42 directs air from the second heat exchanger 16 to the atmosphere. An eighth duct 44 directs outside air to the first heat exchanger 14. A ninth duct 46 directs air from the first heat exchanger 16 to the passenger compartment 8 of a vehicle. A plurality of dampers or control flaps (not shown) open and close the openings to various ducts depending on the mode of operation.

Figs. 1 and 2 illustrate an optional feature which may be included in some embodiments. The optional feature is an apparatus for recirculating and selectively cooling air from the passenger compartment. The optional feature includes the second expansion valve 22, the third heat exchanger 18, and a fan for moving air (not shown).

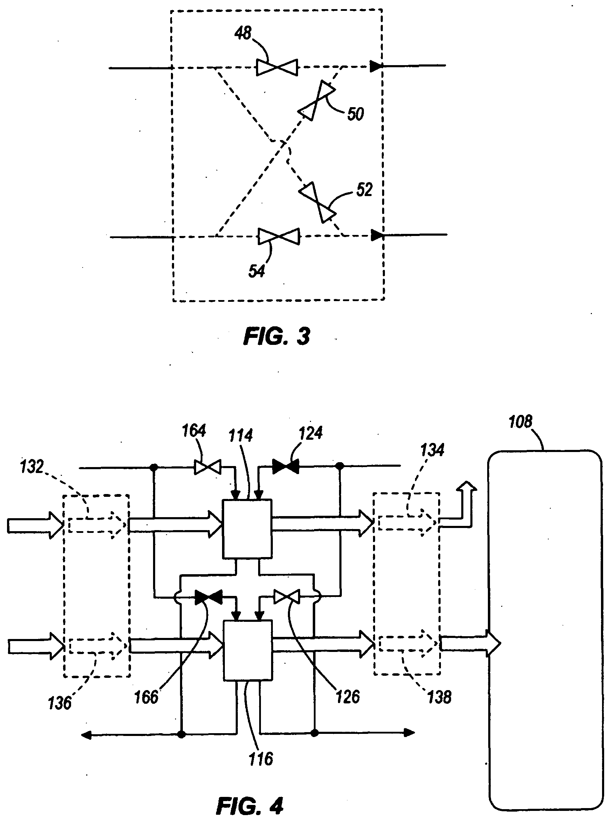

Fig. 3 is a schematic view of an air flow controller. The air flow controller can be used, for example, to control the air flow through the second, fourth, sixth and eighth ducts 32, 36, 40, 44. The air flow controller can also be used, for example, to control the air flow through the third, fifth, seventh, and ninth ducts 34, 38, 42, 46. The air flow controller comprises first, second, third, and fourth dampers 48, 50, 52, 54 which can be set in a first or second position. In the first position the first and fourth dampers 48, 54 are open while the second and third dampers 50, 52 are closed. In the second position the first and fourth dampers 48, 54 are closed while the second and third dampers 50, 52 are open. The air flow controller may be used in combination with the plurality of ducts described in reference to Figs. 1 and 2.

Fig. 1 illustrates the system functioning in a first mode of operation such that the first heat exchanger 14 operates in a regeneration mode and the second heat exchanger 16 operates in a cooling mode. In the first mode of operation, refrigerant is compressed by the compressor 10 to a high temperature gas state, the refrigerant then enters the condenser 12 where the refrigerant is cooled and condensed into a liquid state. The first refrigerant control valve 24 is closed and the second refrigerant control valve 26 is open. One part of the refrigerant then passes through the first expansion valve 20 and enters the second heat exchanger 16. The second refrigerant control valve 26 is open to ensure that the refrigerant enters the second heat exchanger 16. The first refrigerant control valve 24 stays closed to ensure that the refrigerant does not enter the first heat exchanger 14. The first duct 28 directs air from the atmosphere to a heat source 30, which receives heat from a vehicle's engine (not shown), thus heating the air. The air, now being heated, is then directed via the second duct 32 from the heat source 28 to the first heat exchanger 14 and the air dries the desiccant on the first heat exchanger 14. The air, now laden with moisture, is then directed via the third duct 34 to the atmosphere. The fourth duct 36 directs air from the atmosphere to the second heat exchanger 16 where the air is dried and cooled. The air, being dried and cooled, is then directed via the fifth duct 38 into the passenger compartment 8 of the vehicle. In an alternative embodiment, the first mode of operation includes the apparatus for recirculating and selectively cooling air from the passenger compartment 8. Refrigerant passes through the second expansion valve 22 and enters the third heat exchanger 18. Air is drawn from the passenger compartment 8 through the third heat exchanger 18 and then the air returns to the passenger compartment 8.

Fig. 2 illustrates the system functioning in a second mode of operation such that the first heat exchanger 14 operates in a cooling mode and the second heat exchanger 16 operates in a regeneration mode. In the second mode of operation, refrigerant is compressed by the compressor 10 to a high temperature gas state, the refrigerant then enters the condenser 12 where the refrigerant is cooled and condensed into a liquid state. The refrigerant then passes through the first expansion valve 20 and enters the first heat exchanger 14. The first refrigerant control valve 24 is open to ensure that refrigerant enters the first heat exchanger 14. The second refrigerant control valve 26 is closed to ensure that refrigerant does not enter the second heat exchanger 16. The first duct 28 directs air from the atmosphere to a heat source 30, where the air is heated. The sixth duct 40 directs air from the heat source 30 to the second heat exchanger 16 where the air dries the desiccant on the second heat exchanger 16. The air, now laden with moisture, is then directed via the seventh duct 42 from the second heat exchanger 16 to the atmosphere. The eighth duct 44 directs air from the atmosphere to the first heat exchanger 14, where the air is dried and cooled. The air, now dried and cooled, is then directed via the ninth duct 46 from the first heat exchanger to the passenger compartment 8 of the vehicle. In an alternative embodiment, the second mode of operation includes the apparatus for recirculating and selectively cooling air from the passenger compartment 8. Refrigerant passes through the second expansion valve 22 and enters the third heat exchanger 18. Air is drawn from the passenger compartment 8 through the third heat exchanger 18 and then the air returns to the passenger compartment 8.

The humidity control and air conditioning system can be set to switch between the first and second modes of operation, including the necessary changing of valves, dampers and controls, based on a preset amount of time, a signal from a sensor that determines when the desiccant reaches a preset level of wetness, or a signal from a sensor that determines when the air entering the passenger compartment 8 reaches a preset level of humidity.

It is to be understood that the heat source 30 in Figs. 1 and 2 can be a radiator through which hot liquid (e.g. coolant) from the engine circulates, the radiator allowing air from the atmosphere to pass through and be heated. The heat source 30 can also be a heat exchanger through which hot exhaust gasses from the engine circulate, the heat exchanger allowing air from the atmosphere to pass through and be heated. The heat source 30 can also be hot exhaust gasses which are drawn from the engine and passed directly through the first or second heat exchanger 14, 16, depending on whether the first or second heat exchanger 14, 16 is in the regeneration mode.

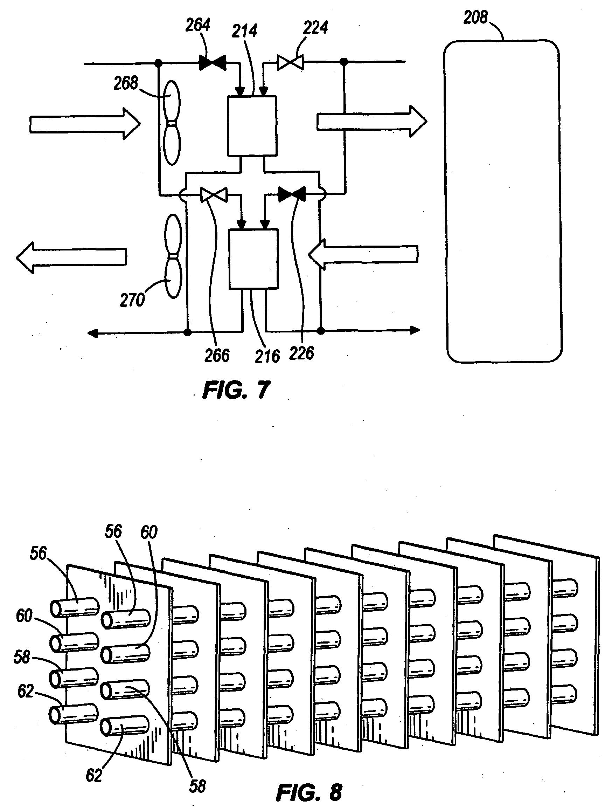

Fig. 8 illustrates a heat exchanger as is used in the embodiments of the invention shown in Figs. 4-7. Refrigerant enters a first and second coils or tubes 56, 58 which pass through the heat-exchanger to cool the heat exchanger. When the desiccant on the heat-exchanger needs to be regenerated, control valves are operated such that refrigerant no longer circulates through the heat exchanger but instead, hot liquid enters a third and fourth coils or tubes 60, 62 which pass through the heat exchanger to heat the heat exchanger.

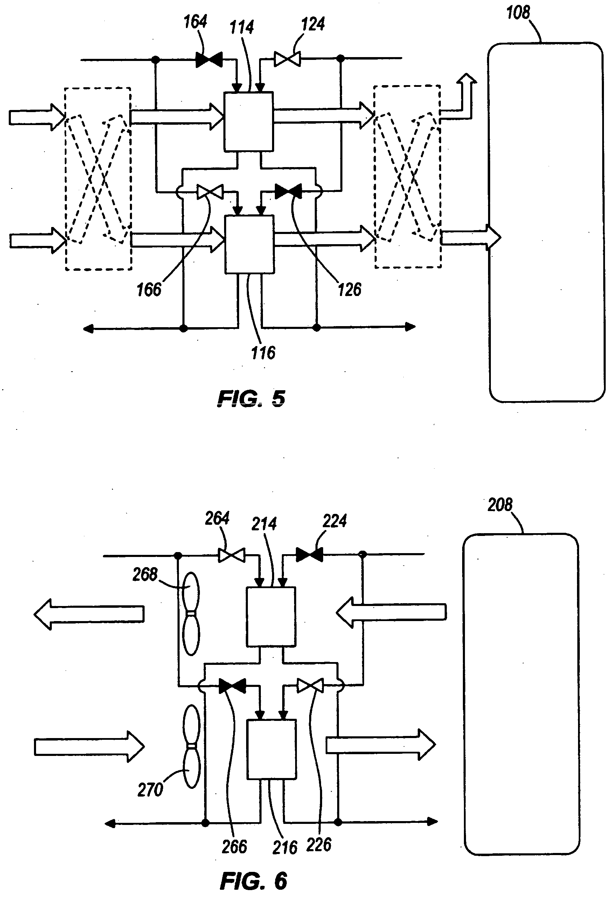

In describing Figs. 4 and 5, the one hundred series of numbering will be used. Thus components that are similar to the components used in the embodiments in Figs. 1-3 will have the same number, except in the one hundred series. For example, the passenger compartment 8 in Figs. 1-3 will be numbered 108 in Figs. 4 and 5.

Figs. 4 and 5 illustrate an alternative embodiment of the invention similar to that illustrated in Figs. 1-3, except that instead of using a heat source 30, hot coolant from a vehicle's engine is used to directly heat the first or second heat exchanger 114, 116.

With reference to Fig. 4, the system functions in a first mode of operation such that a first heat exchanger 114 is operated in the regeneration mode and a second heat exchanger 116 is operated in the cooling mode. A first coolant control valve 164 (e.g. a solenoid valve) lets hot coolant from an engine into a first heat exchanger 114, which is coated with desiccant, in order to heat the first heat exchanger 114 and dry the desiccant. The hot coolant can be water, glycol, a water-glycol mixture, or some other liquid that can act as a heat-sink. A second coolant control valve 166 is closed so that hot coolant from the engine does not enter the second heat exchanger 116. After the hot coolant passes through the first heat exchanger 114, it goes back into the engine to be reheated. A first refrigerant control valve 124 remains closed so that cooled refrigerant does not enter the first heat exchanger 114. A second refrigerant control valve 126 is opened to allow cooled refrigerant into the second heat exchanger 116. After the refrigerant passes through the second heat exchanger 116, it goes back to a compressor 110. Air from the atmosphere is directed via a second duct 132 to the first heat exchanger 114 and the air removes moisture from the desiccant on the first heat exchanger 114. The air, now laden with moisture, is then directed via a third duct 134 to the atmosphere. A fourth duct 136 directs air from the atmosphere to the second heat exchanger 116 where the air is dried and cooled. The air, being dried and cooled, is then directed via a fifth duct 138 into a passenger compartment 108 of the vehicle. A plurality of dampers are set by the system to ensure that air flows through the desired ducts. In an alternative embodiment, the first mode of operation includes the apparatus for recirculating and selectively cooling air from the passenger compartment 108.

Fig. 5 shows the same system as in Fig. 4, but in this second mode of operation the coolant control valves 164, 166, refrigerant control valves 124, 126, and dampers operate to have the first heat exchanger 114 operate in a cooling mode to cool and dry air from the atmosphere and send it into the passenger compartment 108. The second heat exchanger 116 is operated in a regeneration mode such that the second heat-exchanger 116 is regenerated, meaning that moisture is removed from the desiccant of the second heat exchanger 116, and the moist air is sent into the atmosphere. A plurality of ducts are used to direct the air as in the embodiment shown in Fig. 2.

In describing Figs. 6 and 7, the two hundred series of numbering will be used. Thus components that are similar to the components used in the embodiments in Figs. 4 and 5 will have the same number, except in the two hundred series. For example, the passenger compartment 108 in Figs. 4 and 5 will be numbered 208 in Figs. 6 and 7.

Figs. 6 and 7 illustrate an alternative embodiment of this invention similar to the embodiments shown in Figs. 4 and 5 except that rather than using dampers to force the air to flow through different ducts, a first and second reversible fans 268, 270 are used. With reference to Fig. 6, the system functions in the first mode of operation such that a first heat exchanger 214 operates in a regeneration mode and the second heat exchanger 216 operates in a cooling mode. A first coolant control valve 264 is open to allow hot liquid from an engine into the first heat exchanger 214, which is coated with desiccant, in order to heat the first heat exchanger 214 and dry the desiccant. A second coolant control valve 266 is closed so that hot liquid from the engine does not enter the second heat exchanger 216, which is coated with desiccant. After the hot liquid passes through the first heat exchanger 214, it goes back into the engine to be reheated. A first refrigerant control valve 224 remains closed so that cooled refrigerant does not enter the first heat exchanger 214. A second refrigerant control valve 226 is opened to allow cooled refrigerant into the second heat exchanger 216. After the refrigerant passes through the second heat exchanger 216, it returns to a compressor 210. In combination with ducts, the first reversible fan 268 operates to take air from the passenger compartment 208, pass it through the first heat exchanger 214 where the air helps to dry the desiccant, and then the moist air is expelled into the atmosphere. A second reversible fan 270 operates to take air from the atmosphere, pass it through the second-heat exchanger 216 where the air is cooled and dried, and then the air, now cool and dry, goes into a passenger compartment 208.

Fig. 7 shows the same system as in Fig. 6, but in this case the system functions in the second mode of operation such that the first heat exchanger 214 operates in a cooling mode and the second heat exchanger 216 operates in a regeneration mode. The refrigerant control valves 224, 226, coolant control valves 264, 266 and reversible fans 268, 270 operate to have the first heat exchanger 214 cool and dry air from the atmosphere and send it into the passenger compartment 208. The system operates such that the second heat exchanger 216 is regenerated, meaning that moisture is removed from the desiccant, and the heated, moist air is sent into the atmosphere.

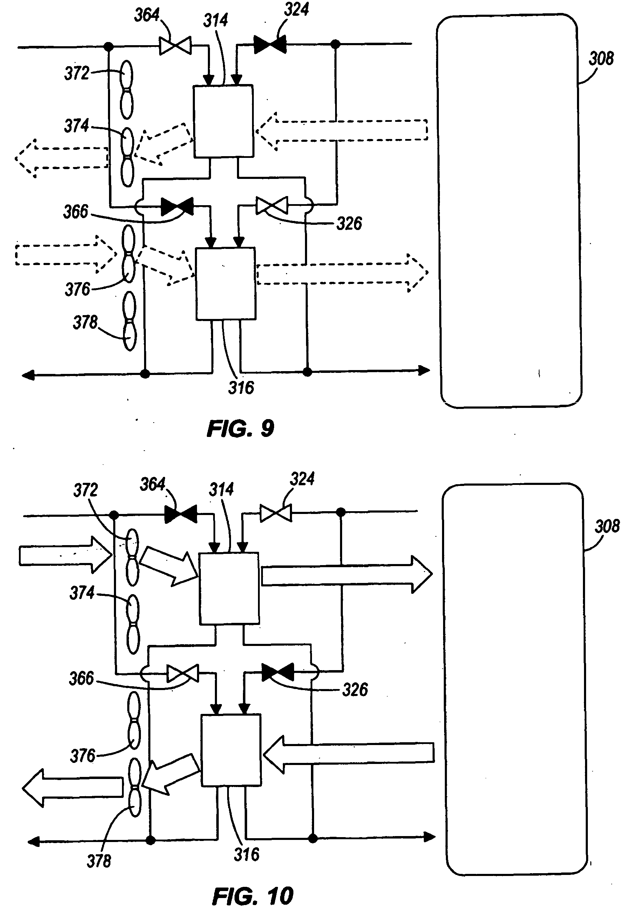

In describing Figs. 9 and 10, the three hundred series of numbering will be used. Thus components that are similar to the components used in the embodiments in Figs. 6 and 7 will have the same number, except in the three hundred series. For example, the passenger compartment 208 in Figs. 6 and 7 will be numbered 308 in Figs. 9 and 10.

Figs. 9 and 10 illustrate an alternative embodiment of this invention using a first, second, third and fourth fans 372, 374, 376, 378 in place of the reversible fans 268, 270 in Figs. 6 and 7. With reference to Fig. 9, the system operates in the first mode of operation such that a first heat exchanger 314 operates in a regeneration mode and a second heat exchanger 316 operates in a cooling mode. A first coolant control valve 364 is open to allow a hot liquid (e.g. coolant) from an engine into the first heat exchanger 314, which is coated with a desiccant, in order to heat the first heat exchanger 314 and dry the desiccant. A second coolant control valve 366 is closed so that hot liquid from the engine does not enter the second heat exchanger 316, which is coated with desiccant. After the hot liquid passes through the first heat exchanger 314, it goes back into the engine to be reheated. A first refrigerant control valve 324 remains closed so that cooled refrigerant does not enter the first heat exchanger 314. A second refrigerant control valve 326 is opened to allow cooled refrigerant into the second heat exchanger 326. After the refrigerant passes through the second heat exchanger 316, it goes back to a compressor 310. The first and fourth fans 372, 378 are turned off. In combination with ducts, the second fan 374 operates to take air from the atmosphere or a passenger compartment 308, pass it through the first heat exchanger 314 where the air helps to dry the desiccant, and then the moist air is expelled into the atmosphere. In combination with ducts, the third fan 376 operates to take air from the atmosphere, pass it through the second heat exchanger 316 where the air is cooled and dried, and the air, now dry and cool, goes into the passenger compartment 308.

Fig. 10 shows the same system as in Fig. 9, but in this case the system functions in the second mode of operation such that the first heat exchanger 314 operates in the cooler mode and the second heat exchanger 316 operates in the regeneration mode. The coolant control valves 364, 366 and refrigerant control valves 324, 326 operate to send refrigerant to the first heat-exchanger 314 and the hot liquid to the second heat-exchanger 316. The second and third fans 374, 376 are turned off. In combination with ducts, the first fan 372 operates to take air from the atmosphere and send it through the first heat exchanger 314 where it is cooled and dried. The air, now cool and dry, then goes into the passenger compartment 308. The fourth fan 378 operates to take air from the atmosphere, or from the passenger compartment 308, and send it through the second heat exchanger 316 where the air helps to dry the desiccant. The moist air is then sent into the atmosphere.

One advantage of the invention is that the invention is able to control humidity and temperature independently to create a more comfortable environment. Existing technologies require a low temperature refrigerant to handle humidity control. The invention allows the evaporative temperature to be about 10 degrees Celsius higher than existing technologies. Normally, a rise of 1 degree Celsius will increase efficiency by 2% to 3%. The higher evaporative temperature will increase energy efficiency of vehicle humidity control and air conditioning systems.

It is to be understood that in any of the embodiments, air that will be cooled and dried can be taken from the atmosphere, from the passenger compartment 8 or from a combination of the two. Air that will be used to assist in regenerating the desiccant can be taken from the atmosphere, from the passenger compartment 8, or from a combination of the two. Air can selectively be drawn from the passenger compartment 8 or the atmosphere by operating dampers and ducts such that a fluid connection is made between the area where air is drawn from and the area where the air is sent.

It is to be understood that in any of the embodiments,, the velocity and volume of air which flows across the heat exchangers 14, 16, 18, or into the passenger compartment 8 can be adjusted automatically by the system or manually by an operator.

It is to be understood that in any of the embodiments, the compressor 10 can be turned off such that cooled refrigerant is not circulated through the heat exchangers 14, 16, 18. In such a case the desiccant on the heat exchanger will still adsorb moisture, thus lowering the humidity level of the air entering the passenger compartment 8.

Thus, the invention provides, among other things, a humidity control and air conditioning system. Various features and advantages of the invention are set forth in the following claims.

## Claims

1. A vehicle comprising:
a frame;
a passenger compartment (8) supported by the frame;
an engine supported by the frame for generating heat;
first and second heat exchangers (14, 16) coated with desiccant, wherein each of the first and second heat exchangers (14, 16) alternates between a cooling mode and a regeneration mode; wherein one of the first and second heat exchangers (14, 16) is in the cooling mode, receives a refrigerant to remove heat from air passing through the heat exchanger and into the passenger compartment (8) of the vehicle, and removes moisture from the air which is adsorbed by the desiccant on the heat exchanger ; wherein the other of the first and second heat exchangers (14, 16) is in the regeneration mode and is heated by heat generated by the engine to remove the moisture from the desiccant on the heat exchanger whereby air having passed through the heat exhanger is laden with moisiture and is discharged to the atmosphere outside the vehicle.

2. The vehicle of claim 1, further comprising a plurality of air ducts (34, 38, 42, 46) that direct air that has been cooled and dried from the heat exchanger (14, 16) in the cooling mode into the passenger compartment (8) and air that has adsorbed moisture from the desiccant from the heat exchanger (14, 16) in regeneration mode into the atmosphere.

3. The vehicle of claim 2, wherein the air ducts include a plurality of dampers to selectively direct air to and from, the atmosphere, the evaporators, and the passenger compartment (8).

4. The vehicle of claim 1, wherein the heat exchanger (14, 16) in the regeneration mode is heated by a coolant that is heated by the engine.

5. The vehicle of claim 4, further comprising a first valve (164) which controls the flow of the coolant to the first heat exchanger and a second valve (166) which controls the flow of the coolant to the second heat exchanger.

6. The vehicle of claim 4, wherein each of the first and second heat exchangers includes tubes (56, 58) for passage of the refrigerant and additional tubes for the passage of the coolant.

7. The vehicle of claim 1, wherein the heat exchanger in the regeneration mode is heated by air that is heated by the engine.

8. The vehicle of claim 1, further comprising a reversible fan (268, 270) associated with each of the first and second heat exchangers (14, 16) such that the fan rotates in a first direction when the associated heat exchanger is in the cooling mode and rotates in a second direction when the associated heat exchanger is in the regeneration mode; or
further comprising first and second fans associated with each of the first and second heat exchangers such that the first fan operates to move air in a first direction through the associated heat exchanger in the cooling mode and the second fan operates to move air in the opposite direction when the associated heat exchanger is in the regeneration mode; or
further comprising first and second fans associated with the first heat exchanger, and third and fourth fans being associated with the second heat exchanger such that the first fan operates to move air in a first direction through the first heat exchanger in the cooling mode, the second fan operates to move air in a direction opposite to the first direction when the second heat exchanger is in the regeneration mode, the third fan operates to move air in a second direction through the second heat exchanger in the regeneration mode, and the fourth fan operates to move air in a direction opposite to the second direction when the second heat exchanger is in the cooling mode,

9. The vehicle of claim 1, further comprising a first valve (24) which controls the flow of refrigerant to the first heat exchanger and a second valve (26) which controls the flow of refrigerant to the second heat exchanger.

10. A method for dehumidifying air entering a vehicle, the method comprising:
alternating first and second heat exchangers (14, 16), each being coated with desiccant, between a cooling mode and a regeneration mode;
receiving a refrigerant into one of the first and second heat exchangers (14, 16) which is in the cooling mode;
passing air through the heat exchanger in the cooling mode in order to cool the air and remove moisture from the air, then discharging the air from the heat exchanger in the cooling mode into a passenger compartment (8) of the vehicle;
heating the other of the first and second heat exchangers (14, 16) which is in the regeneration mode with heat generated by the vehicle's engine;
passing air through the heat exchanger in the regeneration mode in order to remove moisture from the desiccant on the heat exchanger in the regeneration mode; and discharging the air from the heat exchanger in the regeneration mode into the atmosphere.

11. The method of claim 10, further comprising directing air that has been cooled and dried from the heat exchanger (14, 16) in the cooling mode through a first air duct and directing air that has adsorbed moisture from the desiccant from the heat exchanger in regeneration mode through a second air duct into the atmosphere.

12. The method of claim 10, further comprising controlling the flow of refrigerant to the first heat exchanger (14, 16) with a first control valve (24, 26) and controlling the flow of refrigerant to the second heat exchanger with a second control valve (24, 26).

13. The method of claim. 10, wherein heating the heat exchanger includes heating the heat exchanger in the regeneration mode with coolant that is heated by the engine.

14. The method of claim 13, further comprising controlling the flow of coolant to the first heat exchanger with a first control valve and controlling the flow of coolant to the second heat exchanger with a second control valve; or
further comprising passing the refrigerant through tubes of the first heat exchanger when operating in the cooling mode and passing the coolant through additional tubes of the first heat exchanger when operating in the regeneration mode.

15. The vehicle of claim 1, comprising:
a plurality of air ducts that direct air that has been cooled and dried from the heat exchanger in the cooling mode into the passenger compartment and air that has adsorbed moisture from the desiccant from the heat exchanger in regeneration mode into the atmosphere;
a first valve which controls the flow of refrigerant to the first heat exchanger and a second valve which controls the flow of refrigerant to the second heat exchanger;
wherein refrigerant received in the cooling mode is received via one of the valves, the air that has passed through the heat exchanger in the cooling mode is directed to the passenger compartment via the plurality of air ducts, and wherein air passing through the heat exchanger in the regeneration mode is discharged via the plurality of air ducts to the atmosphere outside the vehicle.

## Patentansprüche

1. Fahrzeug, umfassend:
einen Rahmen;
einen von dem Rahmen gestützten Innenraum (8);
einen von dem Rahmen gestützten Motor zur Erzeugung von Wärme;
einen ersten und einen zweiten Wärmetauscher (14, 16), die mit Trocknungsmittel beschichtet sind, wobei jeder des ersten und zweiten Wärmetauschers (14, 16) zwischen einem Kühlmodus und einem Regenerationsmodus wechselt; wobei sich der erste oder der zweite Wärmetauscher (14, 16) im Kühlmodus befindet, ein Kältemittel zum Entfernen von Wärme aus durch den Wärmetauscher und in den Innenraum (8) des Fahrzeugs strömender Luft empfängt und Feuchtigkeit aus der Luft entfernt, die von dem Trocknungsmittel am Wärmetauscher adsorbiert wird; wobei sich der andere des ersten und zweiten Wärmetauschers (14, 16) im Regenerationsmodus befindet und durch von dem Motor erzeugte Wärme erwärmt wird, um Feuchtigkeit aus dem Trocknungsmittel am Wärmetauscher zu entfernen, wodurch Luft, die den Wärmetauscher durchströmt hat, mit Feuchtigkeit beladen ist und an die Atmosphäre außerhalb des Fahrzeugs abgegeben wird.

2. Fahrzeug nach Anspruch 1, ferner umfassend mehrere Luftkanäle (34, 38, 42, 46), die von dem Wärmetauscher (14, 16) im Kühlmodus gekühlte und getrocknete Luft in den Innenraum (8) leiten und Luft, die Feuchtigkeit aus dem Trocknungsmittel vom Wärmetauscher (14, 16) im Regenerationsmodus adsorbiert hat, in die Atmosphäre leiten.

3. Fahrzeug nach Anspruch 2, wobei die Luftkänale mehrere Klappen enthalten, um Luft gezielt zu und von der Atmosphäre, den Verdampfern und dem Innenraum (8) zu leiten.

4. Fahrzeug nach Anspruch 1, wobei der Wärmetauscher (14, 16) im Regenerationsmodus durch ein von dem Motor erwärmtes Kühlmittel erwärmt wird.

5. Fahrzeug nach Anspruch 4, ferner umfassend ein erstes Ventil (164), das den Strom des Kühlmittels zu dem ersten Wärmetauscher steuert, und ein zweites Ventil (166), das den Strom des Kühlmittels zu dem zweiten Wärmetauscher steuert.

6. Fahrzeug nach Anspruch 4, wobei jeder des ersten und zweiten Wärmetauschers Rohre (56, 58) zum Führen des Kältemittels und zusätzliche Rohre zum Führen des Kühlmittels enthält.

7. Fahrzeug nach Anspruch 1, wobei der Wärmetauscher im Regenerationsmodus durch vom Motor erwärmte Luft erwärmt wird.

8. Fahrzeug nach Anspruch 1, ferner umfassend ein Umkehrgebläse (268, 270), das jedem des ersten und zweiten Wärmetauschers (14, 16) zugeordnet ist, so dass sich das Gebläse in eine erste Richtung dreht, wenn sich der zugeordnete Wärmetauscher im Kühlmodus befindet, und in eine zweite Richtung dreht, wenn sich der zugeordnete Wärmetauscher im Regenerationsmodus befindet; oder
ferner umfassend ein erstes und ein zweites Gebläse, die dem ersten und dem zweiten Wärmetauscher zugeordnet sind, so dass das erste Gebläse zum Bewegen von Luft in eine erste Richtung durch den zugeordneten Wärmetauscher im Kühlmodus betrieben wird und das zweite Gebläse zum Bewegen von Luft in die entgegengesetzte Richtung betrieben wird, wenn sich der zugeordnete Wärmetauscher im Regenerationsmodus befindet; oder
ferner umfassend ein erstes und ein zweites Gebläse, die dem ersten Wärmetauscher zugeordnet sind, und ein drittes und ein viertes Gebläse, die dem zweiten Wärmetauscher zugeordnet sind, so dass das erste Gebläse zum Bewegen von Luft in eine erste Richtung durch den ersten Wärmetauscher im Kühlmodus betrieben wird, das zweite Gebläse zum Bewegen von Luft in eine zu der ersten Richtung entgegengesetzte Richtung betrieben wird, wenn sich der zweite Wärmetauscher im Regenerationsmodus befindet, das dritte Gebläse zum Bewegen von Luft in eine zweite Richtung durch den zweiten Wärmetauscher im Regenerationsmodus betrieben wird und das vierte Gebläse zum Bewegen von Luft in eine zu der zweiten Richtung entgegengesetzte Richtung betrieben wird, wenn sich der zweite Wärmetauscher im Kühlmodus befindet.

9. Fahrzeug nach Anspruch 1, ferner umfassend ein erstes Ventil (24), das den Kältemittelstrom zu dem ersten Wärmetauscher steuert, und ein zweites Ventil (26), das den Kältemittelstrom zu dem zweiten Wärmetauscher steuert.

10. Verfahren zum Entfeuchten von in ein Fahrzeug eintretender Luft, wobei das Verfahren Folgendes umfasst:
Wechseln eines ersten und zweiten Wärmetauschers (14, 16), die jeweils mit Trocknungsmittel beschichtet sind, zwischen einem Kühlmodus und einem Regenerationsmodus;
Empfangen eines Kältemittels in dem ersten oder zweiten Wärmetauscher (14, 16), der sich im Kühlmodus befindet;
Führen von Luft durch den Wärmetauscher im Kühlmodus zum Kühlen der Luft und Entfernen von Feuchtigkeit aus der Luft, dann Abführen der Luft vom Wärmetauscher im Kühlmodus in einen Innenraum (8) des Fahrzeugs;
Erwärmen des anderen des ersten und zweiten Wärmetauschers (14, 16), der sich im Regenerationsmodus befindet, mit von dem Fahrzeugmotor erzeugter Wärme;
Führen von Luft durch den Wärmetauscher im Regenerationsmodus zum Entfernen von Feuchtigkeit aus dem Trocknungsmittel am Wärmetauscher im Regenerationsmodus; und
Abführen der Luft vom dem Wärmetauscher im Regenerationsmodus in die Atmosphäre.

11. Verfahren nach Anspruch 10, ferner umfassend Leiten von Luft, die gekühlt und getrocknet worden ist, vom Wärmetauscher (14, 16) im Kühlmodus durch einen ersten Luftkanal und Leiten von Luft, die Feuchtigkeit von dem Trocknungsmittel adsorbiert hat, vom Wärmetauscher im Regenerationsmodus durch einen zweiten Luftkanal in die Atmosphäre.

12. Verfahren nach Anspruch 10, ferner umfassend Steuern des Kältemittelstroms zu dem ersten Wärmetauscher (14, 16) mit einem ersten Steuerventil (24, 26) und Steuern des Kältemittelstroms zu dem zweiten Wärmetauscher mit einem zweiten Steuerventil (24, 26).

13. Verfahren nach Anspruch 10, wobei das Erwärmen des Wärmetauschers Erwärmen des Wärmetauschers im Regenerationsmodus mit Kühlmittel, das vom Motor erwärmt worden ist, umfasst.

14. Verfahren nach Anspruch 13, ferner umfassend Steuern des Kühlmittelstroms zu dem ersten Wärmetauscher mit einem ersten Steuerventil und Steuern des Kühlmittelstroms zu dem zweiten Wärmetauscher mit einem zweiten Steuerventil; oder
ferner umfassend Führen des Kältemittels durch Rohre des ersten Wärmetauschers bei Betrieb im Kühlmodus und Führen des Kühlmittels durch zusätzliche Rohre des ersten Wärmetauschers bei Betrieb im Regenerationsmodus.

15. Fahrzeug nach Anspruch 1, umfassend:
mehrere Luftkanäle, die Luft, die gekühlt und getrocknet worden ist, vom Wärmetauscher im Kühlmodus in den Innenraum leiten und Luft, die Feuchtigkeit vom Trocknungsmittel adsorbiert hat, vom Wärmetauscher im Regenerationsmodus in die Atmosphäre leiten;
ein erstes Ventil, das den Kältemittelstrom zu dem ersten Wärmetauscher steuert, und ein zweites Ventil, das den Kältemittelstrom zu dem zweiten Wärmetauscher steuert;
wobei im Kühlmodus empfangenes Kältemittel über eines der Ventile empfangen wird, die Luft, die den Wärmetauscher im Kühlmodus durchströmt hat, über die mehreren Luftkanäle zum Innenraum geleitet wird und wobei den Wärmetauscher im Regenerationsmodus durchströmende Luft über die mehreren Luftkanäle zur Atmosphäre außerhalb des Fahrzeugs abgeführt wird.

## Revendications

1. Véhicule, comprenant:
un châssis;
un compartiment passagers (8) supporté par le châssis;
un moteur supporté par le châssis pour générer de la chaleur;
des premier et deuxième échangeurs de chaleur (14, 16) revêtus d'un absorbeur d'humidité, dans lequel chacun des premier et deuxième échangeurs de chaleur (14, 16) alterne entre un mode de refroidissement et un mode de régénération; dans lequel un des premier et deuxième échangeurs de chaleur (14, 16) se trouve dans le mode de refroidissement, reçoit un réfrigérant pour éliminer la chaleur de l'air qui passe à travers l'échangeur de chaleur et dans le compartiment passagers (8) du véhicule, et élimine l'humidité de l'air qui est adsorbée par l'absorbeur d'humidité sur l'échangeur de chaleur; dans lequel l'autre des premier et deuxième échangeurs de chaleur (14, 16) se trouve dans le mode de régénération et est chauffé par la chaleur générée par le moteur pour éliminer l'humidité de l'absorbeur d'humidité sur l'échangeur de chaleur, moyennant quoi l'air qui est passé à travers l'échangeur de chaleur est chargé en humidité et est déchargé dans l'atmosphère à l'extérieur du véhicule.

2. Véhicule selon la revendication 1, comprenant en outre une pluralité de conduits d'air (34, 38, 42, 46) qui dirigent l'air qui a été refroidi et séché depuis l'échangeur de chaleur (14, 16) dans le mode de refroidissement dans le compartiment passagers (8) et l'air qui a adsorbé de l'humidité depuis l'absorbeur d'humidité provenant de l'échangeur de chaleur (14, 16) dans le mode de régénération dans l'atmosphère.

3. Véhicule selon la revendication 2, dans lequel les conduits d'air comprennent une pluralité de registres pour diriger de façon sélective l'air vers et à partir de l'atmosphère, des évaporateurs et du compartiment passagers (8).

4. Véhicule selon la revendication 1, dans lequel l'échangeur de chaleur (14, 16) dans le mode de régénération est chauffé par un agent de refroidissement qui est chauffé par le moteur.

5. Véhicule selon la revendication 4, comprenant en outre une première vanne (164) qui régule l'écoulement de l'agent de refroidissement vers le premier échangeur de chaleur et une deuxième vanne (166) qui régule l'écoulement de l'agent de refroidissement vers le deuxième échangeur de chaleur.

6. Véhicule selon la revendication 4, dans lequel chacun des premier et deuxième échangeurs de chaleur comprend des tubes (56, 58) pour le passage du réfrigérant et des tubes supplémentaires pour le passage de l'agent de refroidissement.

7. Véhicule selon la revendication 1, dans lequel l'échangeur de chaleur dans le mode de régénération est chauffé par de l'air qui est chauffé par le moteur.

8. Véhicule selon la revendication 1, comprenant en outre un ventilateur réversible (268, 270) associé à chacun des premier et deuxième échangeurs de chaleur (14, 16) de telle sorte que le ventilateur tourne dans une première direction lorsque l'échangeur de chaleur associé se trouve dans le mode de refroidissement et tourne dans une deuxième direction lorsque l'échangeur de chaleur associé se trouve dans le mode de régénération; ou
comprenant en outre des premier et deuxième ventilateurs associés à chacun des premier et deuxième échangeurs de chaleur de telle sorte que le premier ventilateur agisse pour déplacer de l'air dans une première direction à travers l'échangeur de chaleur associé dans le mode de refroidissement et que le deuxième ventilateur agisse pour déplacer de l'air dans la direction opposée lorsque l'échangeur de chaleur associé se trouve dans le mode de régénération; ou
comprenant en outre des premier et deuxième ventilateurs associés au premier échangeur de chaleur, et des troisième et quatrième ventilateurs associés au deuxième échangeur de chaleur de telle sorte que le premier ventilateur agisse pour déplacer de l'air dans une première direction à travers le premier échangeur de chaleur dans le mode de refroidissement, que le deuxième ventilateur agisse pour déplacer de l'air dans une direction opposée à la première direction lorsque le deuxième échangeur de chaleur se trouve dans le mode de régénération, que le troisième ventilateur agisse pour déplacer de l'air dans une deuxième direction à travers le deuxième échangeur de chaleur dans le mode de régénération, et que le quatrième ventilateur agisse pour déplacer de l'air dans une direction opposée à la deuxième direction lorsque le deuxième échangeur de chaleur se trouve dans le mode de refroidissement.

9. Véhicule selon la revendication 1, comprenant en outre une première vanne (24) qui régule l'écoulement de réfrigérant vers le premier échangeur de chaleur et une deuxième vanne (26) qui régule l'écoulement de réfrigérant vers le deuxième échangeur de chaleur.

10. Procédé pour déshumidifier l'air entrant dans un véhicule, le procédé comprenant les étapes suivantes:
faire alterner des premier et deuxième échangeurs de chaleur (14, 16), chacun étant revêtu d'un absorbeur d'humidité, entre un mode de refroidissement et un mode de régénération;
recevoir un réfrigérant dans un des premier et deuxième échangeurs de chaleur (14, 16) qui se trouve dans le mode de refroidissement;
faire passer de l'air à travers l'échangeur de chaleur dans le mode de refroidissement dans le but de refroidir l'air et d'éliminer l'humidité de l'air, décharger ensuite l'air de l'échangeur de chaleur dans le mode de refroidissement dans un compartiment passagers (8) du véhicule;
chauffer l'autre des premier et deuxième échangeurs de chaleur (14, 16) qui se trouve dans le mode de régénération avec de la chaleur générée par le moteur du véhicule;
faire passer de l'air à travers l'échangeur de chaleur dans le mode de régénération dans le but d'éliminer l'humidité de l'absorbeur d'humidité sur l'échangeur de chaleur dans le mode de régénération; et
décharger l'air provenant de l'échangeur de chaleur dans le mode de régénération dans l'atmosphère.

11. Procédé selon la revendication 10, comprenant en outre la conduite de l'air qui a été refroidi et séché depuis l'échangeur de chaleur (14, 16) dans le mode de refroidissement à travers un premier conduit d'air, et la conduite de l'air qui a adsorbé de l'humidité de l'absorbeur d'humidité depuis l'échangeur de chaleur dans le mode de régénération à travers un deuxième conduit d'air dans l'atmosphère.

12. Procédé selon la revendication 10, comprenant en outre la régulation de l'écoulement de réfrigérant vers le premier échangeur de chaleur (14, 16) à l'aide d'une première vanne de régulation (24, 26), et la régulation de l'écoulement de réfrigérant vers le deuxième échangeur de chaleur à l'aide d'une deuxième vanne de régulation (24, 26).

13. Procédé selon la revendication 10, dans lequel le chauffage de l'échangeur de chaleur comprend le chauffage de l'échangeur de chaleur dans le mode de régénération avec un agent de refroidissement qui est chauffé par le moteur.

14. Procédé selon la revendication 13, comprenant en outre la régulation de l'écoulement d'agent de refroidissement vers le premier échangeur de chaleur à l'aide d'une première vanne de régulation et la régulation de l'écoulement d'agent de refroidissement vers le deuxième échangeur de chaleur à l'aide d'une deuxième vanne de régulation; ou
comprenant en outre le passage du réfrigérant à travers des tubes du premier échangeur de chaleur lorsqu'il fonctionne dans le mode de refroidissement, et le passage de l'agent de refroidissement à travers des tubes supplémentaires du premier échangeur de chaleur lorsqu'il fonctionne dans le mode de régénération.

15. Véhicule selon la revendication 1, comprenant:
une pluralité de conduits d'air qui dirigent l'air qui a été refroidi et séché depuis l'échangeur de chaleur dans le mode de refroidissement dans le compartiment passagers et l'air qui a adsorbé l'humidité de l'absorbeur d'humidité depuis l'échangeur de chaleur dans le mode de régénération dans l'atmosphère; et
une première vanne qui régule l'écoulement de réfrigérant vers le premier échangeur de chaleur et une deuxième vanne qui régule l'écoulement de réfrigérant vers le deuxième échangeur de chaleur,
dans lequel le réfrigérant reçu dans le mode de refroidissement est reçu par l'intermédiaire de l'une des vannes, l'air qui est passé à travers l'échangeur de chaleur dans le mode de refroidissement est dirigé vers le compartiment passagers par l'intermédiaire de la pluralité de conduits d'air, et dans lequel l'air qui passe à travers l'échangeur de chaleur dans le mode de régénération est déchargé par l'intermédiaire de la pluralité de conduits d'air dans l'atmosphère à l'extérieur du véhicule.
